# EUROPÄISCHE PATENTANMELDUNG

(11) **EP 0 775 678 A1**
(43) Veröffentlichungstag der Anmeldung: **28.05.1997**
(21) Anmeldenummer: 96118655.8
(22) Anmeldetag: 21.11.1996
(51) Int. Cl.: C04B 24/38

(54) **Baustoffmischung**

(30) Priorität: 25.11.1995 DE 19543933
(71) Anmelder: HOECHST AKTIENGESELLSCHAFT, 65926 Frankfurt am Main (DE)
(72) Erfinder: Mann, Heinz-Josef, 55291 Saulheim (DE)

(57) **Zusammenfassung**

Eine Baustoffmischung für den Einsatz in Handputzen, Maschinenputzen und Spachtelmassen mit verringerter Klebrigkeit enthält mindestens ein anorganisches Bindemittel sowie einen Celluloseether, der mit einem Hydrophobierungsmittel versetzt worden ist.

## Beschreibung

Die vorliegende Erfindung betrifft Celluloseether enthaltende Baustoffmischungen, Verfahren zu deren Herstellung und deren Verwendung in Hand- und Maschinenputzen.

Celluloseether werden in modernen Baustoffgemischen wie Hand- und Maschinenputzen seit mehr als 20 Jahren eingesetzt. Sie erhöhen deutlich die Wasserretention der Putzmischung, verbessern die Haftung und beeinflussen deren Konsistenz und Plastifizierung.

Putze müssen eine ausreichende Konsistenz aufweisen, damit sie beim Auftragen auf Wände und Decken sowie beim anschließenden Begradigen (Planverziehen) nicht abrutschen. Dieses Verhalten wird durch Zugabe von Celluloseethern zur Putzmischung erreicht. Dabei muß jedoch neben der gewünschten Verdickungswirkung auch eine durch den Celluloseether hervorgerufene Klebneigung in Kauf genommen werden. Die Klebneigung erschwert das Aufziehen und Planverziehen des Putzes, das im Normalfall mit einer 2 m langen Ziehlatte (Kartätsche) manuell durchgeführt wird.

Um die Klebrigkeit von Putzgemischen zu verringern, also die Plastifizierung zu verbessern, werden üblicherweise durch Zusatzstoffe modifizierte Celluloseether eingesetzt. Die wichtigsten Modifizierungsmittel der Celluloseether für Baustoffmischungen sind Polyacrylamide (DE-A 21 46 709, US-A 4 021 257).

Gemäß DE-A 33 39 860 kann der Celluloseether auch durch chemische Verknüpfung mit Polyacrylamiden für Baustoffmischungen optimiert werden. Durch hydrophobe Substituenten modifizierte Celluloseether sind aus EP-A 0 556 911 als Verdicker für Schutzanstriche bekannt.

In DE-A 39 10 742 wird die Verwendung von hydrophobierten, nicht ionogenen Celluloseethern in Dispersionsfarben beschrieben. Die Hydrophobierung einer Methylhydroxyethylcellulose wird erreicht, indem man den Celluloseether auf 80 bis 90 °C erwärmt, eine Polyethylen- oder Paraffinölemulsion aufsprüht und anschließend das Wasser, das durch die Emulsion eingebracht wurde, verdampft. Der in einer handelsüblichen Dispersionsfarbe eingesetzte hydrophobierte Celluloseether verbessert nach dem Aushärten der Farbe deren Scheuerbeständigkeit, beeinflußt jedoch die Verarbeitbarkeit der Farbe nicht.

Die Aufgabe der vorliegenden Erfindung bestand darin, eine Baustoffmischung für Hand- und Maschinenputze zur Verfügung zu stellen, die eine ausreichende Konsistenz und eine verringerte Klebeneigung aufweist.

Überraschenderweise verringern mit Hydrophobierungsmitteln behandelte Celluloseether in Baustoffgemischen die Klebrigkeit von Hand- und Maschinenputzen beim Aufziehen in der wässrigen Phase des Putzes, ohne ihren positiven Einfluß auf den Konsistenzaufbau zu verlieren.

Gegenstand der Erfindung ist eine Baustoffmischung, enthaltend mindestens ein anorganisches Bindemittel sowie mindestens einen Celluloseether, der mit einem Hydrophobierungsmittel versetzt worden ist.

Geeignete anorganische Bindemittel sind vorzugsweise Zement, Kalk und Gips. Diese Bindemittel sind in den für Baustoffmischungen üblichen Mengen vorhanden, wie beispielsweise in der Broschüre der Hoechst AG "Modern und rationell Bauen mit ®Tylose und Hilfsmitteln", Ausgabe Januar 1990, angeführt.

Geeignete Celluloseether sind vorzugsweise handelsübliche, nichtionogene, wasserlösliche Celluloseether, insbesondere Methylcellulose, Hydroxyethylcellulose, Methylhydroxyethylcellulose, Methylhydroxypropylcellulose und Ethylhydroxyethylcellulose, die vorzugsweise die folgenden durchschnittlichen Substitutionsgrade (DS) beziehungsweise molaren Substitutionsgrade (MS) aufweisen:

| Celluloseether | DS | MS |
|---|---|---|
| Methylcellulose | 1,4 - 2,2 | |
| Methylhydroxyethylcellulose | 1,3 - 2,0 | 0,05 - 0,5 |
| Methylhydroxypropylcellulose | 1,3 - 2,2 | 0,1 - 1,0 |

Die Celluloseether können vorzugsweise mit einem Polyacrylamid modifiziert sein. Derartig modifizierte Celluloseether sind beispielsweise aus DE-A 12 83 726 bekannt.

Der Anteil der Celluloseether in den Baustoffgemischen beträgt vorzugsweise 0,05 bis 1,5 Gew.-%, insbesondere 0,1 bis 1 Gew.-%, bezogen auf die Gesamtmenge an Trockensubstanz.

Bevorzugte Hydrophobierungsmittel sind mehrwertige (C₈-C₂₂)-Carbonsäuresalze, insbesondere Calcium- oder Magnesiumstearat, Paraffine, insbesondere (C₈-C₂₂)-Paraffine, Polyethylene mit einem Molekulargewicht (Gewichtsmittel) von 1.500 bis 50.000 g/mol, Silicone und Siloxane, insbesondere Dimethylsiloxane.

Die Menge an Hydrophobierungsmittel beträgt vorzugsweise 0,3 bis 3 Gew.-%, insbesondere 0,5 bis 1,5 Gew.-%, bezogen auf den Celluloseether.

Als weitere Zusatzstoffe können in der erfindungsgemäßen Baustoffmischung handelsübliche Luftporenbildner, Verdicker, Dispergiermittel, Verflüssiger und Stabilistoren enthalten sein, wie sie beispielsweise in EP-A 0 530 768 beschrieben sind.

Weiterhin sind in den Baustoffmischungen übliche anorganische Zuschlagstoffe, beispielsweise Quarzsand, Dolomit, Kalksteinsand, Calciumsulfat-Dihydrat, in den beispielsweise aus der Broschüre der Hoechst AG "Modern und rationell Bauen mit ®Tylose und Hilfsmitteln", Ausgabe Januar 1990, bekannten Mengen.

Gegenstand der vorliegenden Erfindung ist auch ein Verfahren zur Herstellung der Baustoffmischungen durch Zusammengeben von mindestens einem anorganischen Bindemittel, üblichen anorganischen Zuschlagstoffen, mindestens einem Celluloseether, der mit einem Hydrophobierungsmittel versetzt worden ist, sowie gegebenenfalls weiteren Zusatzstoffen.

Vorzugsweise wird zunächst der Celluloseether mit dem Hydrophobierungsmittel versetzt und der hydrophobierte Celluloseether dann zu der Mischung der übrigen Komponenten zugesetzt. Zur Hydrophobierung wird der Celluloseether vorzugsweise mit einer wäßrigen Emulsion oder Dispersion des Hydrophobierungsmittels, insbesondere bei Raumtemperatur, besprüht. Aufgrund der geringen Menge des auf diese Weise zwangsläufig eingeführten Wassers, beispielsweise 0,5 bis 1,5 Gew.-%, werden Lagerstabilität und Rieselfähigkeit des Celluloseethers nicht negativ beeinflußt.

In Putzgemischen, die Celluloseether enthalten, die mit einem Hydrophobierungsmittel versetzt worden sind, wird die Klebrigkeit deutlich verringert und das Aufziehen und Planverziehen wesentlich erleichtert.

Gegenstand der Erfindung ist auch die Vewendung der Baustoffmischung in Handputzen, vorzugsweise auf Zementbasis, oder Maschinenputzen, vorzugsweise auf Gipsbasis, sowie in Spachtelmassen, vorzugsweise Gipsspachtelmassen.

### BEISPIELE

Die in den Beispielen angeführten Teile und Prozente beziehen sich auf das Gewicht, soweit nicht anders vermerkt.

Die für die Versuche eingesetzten Celluloseether waren folgendermaßen charakterisiert:

| | Veretherungsgrad | | Viskosität (Höppler, 1,9 %ig in Wasser, 23°C) [mPa·s] |
|---|---|---|---|
| | DS | MS | |
| I. Methylhydroxyethylcellulose (MHEC) | 1,50 | 0,12 | 15.000 |
| II. Methylhydroxyethylcellulose (MHEC) | 1,65 | 0,15 | 60.000 |
| III. Methylhydroxyethylcellulose (MHEC) | 1,60 | 0,14 | 10.000 |

Als Hydrophobierungsmittel wurden eingesetzt:
A) 50 %ige wäßrige Suspension von Calciumstearat in Wasser,
B) 40 %ige wäßrige, kationisch emulgierte (C₈-C₂₂)-Paraffin-Emulsion,
C) 55 %ige wäßrige Emulsion eines Dimethylsiloxans

Von den Hydrophobierungsmitteln wurde jeweils so viel eingesetzt, daß der Wirkstoffgehalt, bezogen auf die Celluloseethermenge, 0,5 Gew.-% betrug. Das Aufsprühen erfolgte mit einer handelsüblichen Sprühvorrichtung in einem geeigneten Mischer. Nach der Beendigung des Sprühvorganges wurde noch 30 Minuten nachgemischt.

Die eingesetzten Celluloseether waren mit Polyacrylamiden modifiziert. Als Methylhydroxyethylcellulose (MHEC I) wurde ®Tylose FL 15002 (Hoechst AG), als Methylhydroxyethylcellulose (MHEC II) Tylose P 60000 Z (Hoechst AG) und als Methylhydroxyethylcellulose (MHEC III) Tylose BA 2741 (Hoechst AG) eingsetzt.

Die behandelten Celluloseether wurden in den nachfolgenden Baustoffgemischen ausgeprüft. Als Vergleich diente jeweils eine Rezeptur mit einem unbehandelten Celluloseether.

Zusammensetzung der mineralischen Baustoffgemische:
**1. Gips-Kalk-Maschinenputz**
   a)
      40 Teile Gipshalbhydrat 10 Teile Kalkhydrat 50 Teile Kalksteinsand (0,1 - 1 mm) 0,02 Teile Olefinsulfonat 0,01 Teile Hydroxypropylstärke 0,05 Teile Weinsäure 0,18 Teile MHEC I, unbehandelt (Vergleich)
   b) Wie a), jedoch mit 0,18 Teilen MHEC I, mit A behandelt
   c) Wie a), jedoch mit 0,18 Teilen MHEC I, mit B behandelt
   d) Wie a), jedoch mit 0,18 Teilen MHEC I, mit C behandelt
   e) Wie a), jedoch mit 0,17 Teilen MHEC II, mit C behandelt
   f) Wie a), jedoch mit 0,17 Teilen MHEC II, mit A behandelt
**2. Zement-Kalk-Grundputz**
   a) 12 Teile Portlandzement
      5 Teile Kalkhydrat
      10 Teile Kalksteinmehl
      73 Teile Kalksteinsand 0,1 - 1,5 mm
      0,03 Teile Olefinsulfonat
      0,01 Teile Hydroxypropylstärke
      0,1 Teile MHEC II, unbehandelt (Vergleich)
   b) Wie a), jedoch mit 0,16 Teilen MHEC II, mit A behandelt
   c) Wie a), jedoch mit 0,16 Teilen MHEC II, mit B behandelt
   d) Wie a), jedoch mit 0,16 Teilen MHEC II, mit C behandelt
**3. Gipsspachtelmasse**
   a) 80 Teile Modellgips
      20 Teile Calciumcarbonatmehl < 0,5 mm
      0,2 Teile Targon GA 1 (Gipsverzögerer)
      0,5 Teile MHEC III, unbehandelt (Vergleich)
   b) Wie a), jedoch mit 0,5 Teilen MHEC III, mit A behandelt
   c) Wie a), jedoch mit 0,5 Teilen MHEC III, mit B behandelt
   d) Wie a), jedoch mit 0,5 Teilen MHEC III, mit C behandelt.

Die Baustoffgemische 1 a) bis f) und 2 a) bis d) wurden in Putzmaschinenversuchen miteinander verglichen, die Baustoffgemische 3 a) - d) in Handversuchen im Labor. Die Bewertung erfolgt nach dem Schema (1 = sehr gut, 6 = ungenügend).

| **Gips-Kalk-Maschinenputz** | | | | | | |
|---|---|---|---|---|---|---|
| | V 1 a) | 1 b) | 1 c) | 1 d) | 1 e) | 1 f) |
| Wasserdurchflußmenge [l/h] | 620 | 620 | 620 | 620 | 540 | 540 |
| Konsistenz, Ausbreitmaß [mm] | 168 | 170 | 171 | 172 | 166 | 168 |
| Standvermögen | i.O. | i.O. | i.O. | i.O. | i.O. | i.O. |
| Aufziehen | 2-3 | 1-2 | 2 | 1-2 | 3 | 2 |
| Zuziehen | 3 | 1-2 | 2 | 1-2 | 3 | 2 |
| Wasserretention [%] | 93,4 | 94,5 | 94,5 | 94,0 | 94,1 | 94,7 |
| Haftzugfestigkeiten auf Beton [N/mm²] | 0,42 | 0,45 | 0,52 | 0,53 | 0,49 | 0,52 |

| **Zement-Kalk-Maschinenputz** | | | | |
|---|---|---|---|---|
| | V 2 a) | 2 b) | 2 c) | 2 d) |
| Wasserdurchflußmenge [l/h] | 420 | 420 | 420 | 420 |
| Konsistenz, Ausbreitmaß [mm] | 171 | 169 | 171 | 173 |
| Standvermögen | i.O. | i.O. | i.O. | i.O. |
| Aufziehen | 2 | 1 | 1 (-) | 1 |
| Wasserretention [%] | 91,6 | 91,3 | 91,8 | 91,6 |
| Haftzugfestigkeiten auf Beton [N/mm²] | 0,28 | 0,31 | 0,29 | 0,25 |

| **Gipsspachtelmasse** | | | | |
|---|---|---|---|---|
| | V 3 a) | 3 b) | 3 c) | 3 d) |
| Wasserfaktor | 0,55 | 0,55 | 0,55 | 0,55 |
| Verziehen auf Gipskarton | 2-3 | 1-2 | 1-2 | 1-2 |
| Kleben am Werkzeug | deutlich | wenig | wenig | wenig |

### Ergebnisse

Die Baustoffgemische, die erfindungsgemäß hydrophobierte Celluloseether enthielten (1b - 1f, 2b - 2d und 3b - 3d), zeigten deutliche Vorteile in der Verarbeitung im Vergleich zu den Rezepturen, die herkömmliche Celluloseether enthielten (1a, 2a und 3a).

## Patentansprüche

1. Baustoffmischung, enthaltend mindestens ein anorganisches Bindemittel sowie einen Celluloseether, der mit einem Hydrophobierungsmittel versetzt worden ist.

2. Baustoffmischung nach Anspruch 1, dadurch gekennzeichnet, daß ein Hydrophobierungsmittel aus der Gruppe der mehrwertigen (C₈-C₂₂)-Carbonsäuresalze, Paraffine, Polyethylene mit einem Molekulargewicht (Gewichtsmittel) von 1.500 bis 50.000 g/mol, Silicone und Siloxane enthalten ist.

3. Baustoffmischung nach Anspruch 1, dadurch gekennzeichnet, daß ein Hydrophobierungsmittel aus der Gruppe Calciumstearat, Magnesiumstearat, (C₈-C₂₂)-Paraffine und Dimethylsiloxane enthalten ist.

4. Baustoffmischung nach Anspruch 1, dadurch gekennzeichnet, daß die Menge an Hydrophobierungsmittel 0,3 bis 3 Gew.-%, bezogen auf den Celluloseether, beträgt.

5. Baustoffmischung nach Anspruch 1, dadurch gekennzeichnet, daß mindestens ein anorganisches Bindemittel aus der Gruppe Zement, Gips und Kalk, ein Celluloseether aus der Gruppe Methylcellulose, Methylhydroxyethylcellulose und Methylhydroxypropylcellulose sowie ein anorganischer Zuschlagstoff aus der Gruppe Quarzsand, Dolomit, Kalksteinsand und Calciumsulfat-Dihydrat enthalten ist.

6. Baustoffmischung nach Anspruch 1, dadurch gekennzeichnet, daß der Celluloseether zusätzlich mit Polyacrylamid modifiziert ist.

7. Verfahren zur Herstellung einer Baustoffmischung nach Anspruch 1 durch Zusammengeben von mindestens einem anorganischen Bindemittel, üblichen anorganischen Zuschlagstoffen, einem Celluloseether, der mit einem Hydrophobierungsmittel versetzt worden ist, sowie gegebenenfalls weiteren Zusatzstoffen.

8. Verfahren nach Anspruch 5, dadurch gekennzeichnet, daß der Celluloseether mit einer wäßrigen Emulsion oder Dispersion des Hydrophobierungsmittels besprüht wird und der hydrophobierte Celluloseether dann zu der Mischung der übrigen Komponenten der Baustoffmischung zugesetzt wird.

9. Verwendung einer Baustoffmischung nach Anspruch 1 in Handputzen oder Maschinenputzen.

10. Verwendung einer Baustoffmischung nach Anspruch 1 in Spachtelmassen.
